# FASCICULE DE BREVET EUROPEEN

(11) **EP 3 769 364 B1**
(45) Date de publication et mention de la délivrance du brevet: **10.09.2025**
(21) Numéro de dépôt: 19724552.5
(22) Date de dépôt: 18.04.2019
(51) Int. Cl.: H01M 10/647, H01M 10/6556, H01M 10/6569, H01M 10/6552, H01M 10/617, H01M 10/613

(54) **DISPOSITIF DE STOCKAGE ELECTRIQUE D'UN VEHICULE, CONTROLÉ THERMIQUEMENT A L'AIDE DE CALODUCS**
ELEKTRISCHES LAGERUNGSELEMENT FÜR EIN FAHRZEUG, DAS MIT WÄRMEROHREN THERMISCH REGULIERT WIRD
ELECTRICAL STORAGE ELEMENT FOR A VEHICLE, WHICH IS THERMALLY REGULATED USING HEAT PIPES

(30) Priorité: 26.04.2018 FR 1853676
(43) Date de publication de la demande: 27.01.2021
(73) Titulaire: Valeo Systemes Thermiques-THS, 78322 Le Mesnil Saint Denis Cedex (FR)
(72) Inventeur: MAMMERI, Amrid, 78322 LE MESNIL SAINT DENIS CEDEX (FR); AZZOUZ, Kamel, 78322 LE MESNIL SAINT DENIS CEDEX (FR)
(74) Mandataire: Valeo Powertrain Systems
(86) Numéro de dépôt international: PCT/FR2019/050926
(87) Numéro de publication internationale: WO 2019/207237

(56) Documents cités:
- CN-A- 107 403 976
- FR-A1- 3 056 829
- US-A1- 2010 216 004

## Description

L'invention concerne un dispositif de stockage électrique d'un véhicule, configuré pour alimenter au moins un moteur électrique de traction du véhicule, contrôlé thermiquement à l'aide de caloducs. L'invention trouve une application particulièrement avantageuse, mais non exclusive, avec les véhicules automobiles.

Il est connu dans le domaine du stockage électrique que la gestion thermique des batteries représente une part importante dans le développement de ces dernières. En effet, le fonctionnement, le rendement ainsi que la durée de vie d'une cellule électrique est directement influencé par sa température. Il est également connu que la température d'une batterie doit être maintenue dans une gamme de l'ordre de 15°C à 35°C et plus spécifiquement entre 20°C et 30°C.

Ce maintien de la température doit être assuré lors de la phase de roulage du véhicule pourvu de cellules électriques, mais aussi, lors des phases d'arrêt et, notamment, lors des phases de charges des cellules électriques. En outre, une charge rapide des cellules électriques occasionne généralement une augmentation de la chaleur au sein de ces dernières. Il est alors nécessaire de refroidir ces cellules électriques afin de préserver leur durée de vie. De même, les conditions climatiques ou la localisation géographique peuvent fortement influencer la température des cellules électriques. Dans les conditions climatiques froides où la température des cellules électriques peut baisser en dessous d'un seuil déterminé, il est recommandé de réchauffer les cellules électriques pour rester dans les gammes de température de fonctionnement optimal énoncées ci-avant.

Du fait du coût particulièrement élevé des cellules électriques par rapport au coût total du véhicule, il est indispensable d'assurer un contrôle efficient de la température de ces dernières. De plus, la notion d'encombrement et de poids prend une place importante dans le dimensionnement des cellules électriques, de sorte à améliorer le rapport entre les performances et le coût.

Dans ce contexte, il est connu d'apposer contre une face d'une cellule électrique un caloduc connecté thermiquement à un échangeur de chaleur, afin de parfaire le transfert thermique de la cellule électrique vers l'échangeur de chaleur.

Cependant, un gradient thermique se forme au sein de la cellule électrique. En effet, le caloduc étant apposé contre une unique face de la cellule électrique, le refroidissement de la cellule électrique est inhomogène. Les autres faces de la cellule électrique ne sont donc pas refroidies de la même manière. Cet inconvénient devient d'autant plus important qu'une nouvelle technique de charge du dispositif de stockage électrique a fait son apparition récemment. Elle consiste à charger ce dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique au-delà d'un seuil critique pour le dispositif de stockage électrique.

Il faut donc constater que le système connu, bien que permettant un meilleur ajustement thermique de la cellule thermique, ne répond pas entièrement à la double problématique qu'est l'homogénéité des températures au sein de la cellule électrique et le refroidissement de celle-ci en conditions critiques.

Les documents FR 3056829 A1, CN 107403976 A et US 2010/216004 A1 décrivent des dispositifs de stockage électriques de l'art antérieur pertinents.

L'invention a donc pour objectif de remédier efficacement aux inconvénients de l'art antérieur en harmonisant le contrôle de la température sur une plus grande zone de contact entre la cellule électrique et le caloduc. Ainsi, la durée de vie et le fonctionnement de cette dernière s'en trouvent améliorés.

A cet effet, l'invention a pour objet un dispositif de stockage électrique selon la revendication 1.

L'expression « section parallélépipédique » renseigne sur la forme de la cellule électrique. En effet, on vise ici le fait que la cellule électrique a la forme d'un parallélépipède rectangle ou d'un cube, vu selon un plan de coupe traversant la cellule électrique et parallèle à une face supérieure de celle-ci d'où émergent des plots de connexion électrique.

Les échanges thermiques entre le dispositif de stockage électrique et l'échangeur de chaleur sont réversibles. En effet, le caloduc permettant la liaison thermique entre la cellule électrique et l'échangeur de chaleur peut fonctionner dans un mode de « refroidissement » de la cellule électrique ou dans un mode de « chauffage » de cette dernière.

Ce positionnement du caloduc sur au moins deux faces de la cellule électrique créée une surface d'échange thermique importante avec la cellule électrique. En outre, ce positionnement permet de répartir les échanges thermiques sur une plus grande zone de contact, homogénéisant, de surcroît, la température dans l'intégralité de la cellule électrique.

En plus d'une amélioration de l'homogénéité de température, l'invention favorise le drainage d'une plus grande quantité de calories vers l'échangeur de chaleur, ce qui convient bien pour une situation de charge rapide où la cellule électrique tend à s'échauffer.

Selon l'invention, le caloduc est couplé thermiquement avec au moins trois faces d'une même cellule électrique.

Selon une caractéristique, le caloduc est couplé thermiquement avec au moins quatre faces d'une même cellule électrique.

Selon une caractéristique, le caloduc est couplé thermiquement avec au moins cinq faces d'une même cellule électrique.

En augmentant le nombre de faces de la cellule électrique couplées thermiquement au caloduc, l'échange de calories est amélioré du fait de l'augmentation de la surface d'échange, ce qui améliore directement la capacité thermique du dispositif de stockage électrique. Par ailleurs, l'augmentation du nombre de faces de la cellule électrique couplées thermiquement au caloduc permet d'améliorer la capacité d'homogénéisation de la température dans l'intégralité de la cellule électrique, ce qui améliore de façon considérable les capacités du dispositif de stockage électrique et fiabilise celui-ci.

Selon une caractéristique, les parois du caloduc sont composées de matière rigide.

Selon une caractéristique, les parois du caloduc sont composées de matière souple.

On entend ici par « matière rigide » ou « matière souple » le fait que les parois du caloduc peuvent avoir différentes épaisseurs. En effet, un même matériau peut avoir ses propriétés physiques modifiées en fonction de ses dimensions, et notamment de son épaisseur. A titre d'exemple, les parois du caloduc peuvent être composées d'Aluminium, ou d'un alliage d'aluminium, ou encore de Cuivre et peuvent être qualifiées de souple lorsque l'épaisseur est faible ou de rigide lorsque l'épaisseur est importante. Les expressions souple et rigide sont ainsi à interpréter l'une par rapport à l'autre.

Dans le cas de parois du caloduc en matière rigide, le caloduc forme une protection mécanique de la face de la cellule électrique concernée.

Dans le cas de parois du caloduc en matière souple, le caloduc peut aisément épouser la forme de la cellule électrique et être facilement installé sur celle-ci, notamment en l'enfilant autour de la cellule électrique.

Selon une caractéristique, une section du caloduc est complémentaire de la section parallélépipédique de la cellule électrique.

La « complémentarité de section », c'est-à-dire la ressemblance géométrique entre le volume intérieur du caloduc et la périphérie extérieure de la cellule électrique, tous deux de forme parallélépipédique, améliore les surfaces d'échange de chaleur et augmente la capacité de transfert de calories du caloduc vis-à-vis de la cellule électrique.

Selon une caractéristique, le caloduc comprend une première paroi séparée d'une deuxième paroi par un volume hermétique rempli d'un fluide diphasique.

En effet, pendant le transfert de calories entre la cellule électrique et l'échangeur thermique par l'intermédiaire du caloduc, du fait du cycle thermodynamique qui prend place dans le caloduc, le fluide contenu à l'intérieur du caloduc peut être dans une phase liquide ou dans une phase gazeuse.

Selon une caractéristique, le caloduc comprend au moins un dispositif d'espacement disposé entre la première paroi et la deuxième paroi.

Le volume hermétique, au sein duquel le fluide diphasique se déplace, doit être constant pour permettre au fluide diphasique d'effectuer un cycle thermodynamique dans de bonnes conditions. En ce sens, le dispositif d'espacement génère en permanence et maintient cet espace entre les deux parois du caloduc créant le volume hermétique d'épaisseur constante.

Selon l'invention, le dispositif de stockage électrique comprend une pluralité de cellules électriques, chacune pourvue d'un caloduc individuel couplé thermiquement avec au moins les deux faces de la même cellule électrique.

Selon l'invention, les caloducs enveloppant les cellules électriques sont disposés en contact les uns contre les autres. Selon un exemple ne tombant pas sous l'invention, les caloducs enveloppant les cellules électriques sont disposés de manière à laisser un espace entre chaque caloduc. Dans ce second cas, il existe une lame d'air entre chaque caloduc.

Selon une caractéristique, l'échangeur de chaleur comprend une pluralité de tubes plats sur lesquels repose la pluralité de cellules électriques. L'échangeur de chaleur peut être configuré pour être parcouru par un liquide caloporteur ou par un fluide réfrigérant, notamment à changement de phases.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, du dispositif de stockage électrique comprenant une cellule électrique munie d'un caloduc couplé thermiquement sur deux des faces de la cellule électrique,
- la figure 2 est une vue générale, en perspective, du dispositif de stockage électrique comprenant une cellule électrique munie d'un caloduc couplé thermiquement sur trois des faces de la cellule électrique,
- la figure 3 est une vue générale, en perspective, du dispositif de stockage électrique comprenant une cellule électrique munie d'un caloduc couplé thermiquement sur trois des faces de la cellule électrique selon un second mode de configuration,
- la figure 4 est une vue générale, en perspective, du dispositif de stockage électrique comprenant une cellule électrique munie d'un caloduc couplé thermiquement sur quatre des faces de la cellule électrique,
- la figure 5 est une vue générale, en perspective, du dispositif de stockage électrique comprenant une cellule électrique munie d'un caloduc couplé thermiquement sur cinq des faces de la cellule électrique,
- la figure 6 représente une vue schématique d'un dispositif de stage électrique comprenant plusieurs cellules électriques, munies chacune d'un caloduc individuel effectuant les échanges thermiques avec l'échangeur de chaleur,
- la figure 7 représente une vue globale d'un dispositif de stockage électrique ne tombant pas sous l'invention comprenant une pluralité de cellules électriques munies chacune de leur caloduc respectif en relation thermique avec un échangeur de chaleur.

Il faut tout d'abord noter que les figures exposent l'invention de manière détaillée pour mettre en œuvre l'invention, lesdites figures pouvant bien entendu servir à mieux définir l'invention le cas échéant.

Sur les différentes figures, les éléments identiques portent les mêmes numéros de référence.

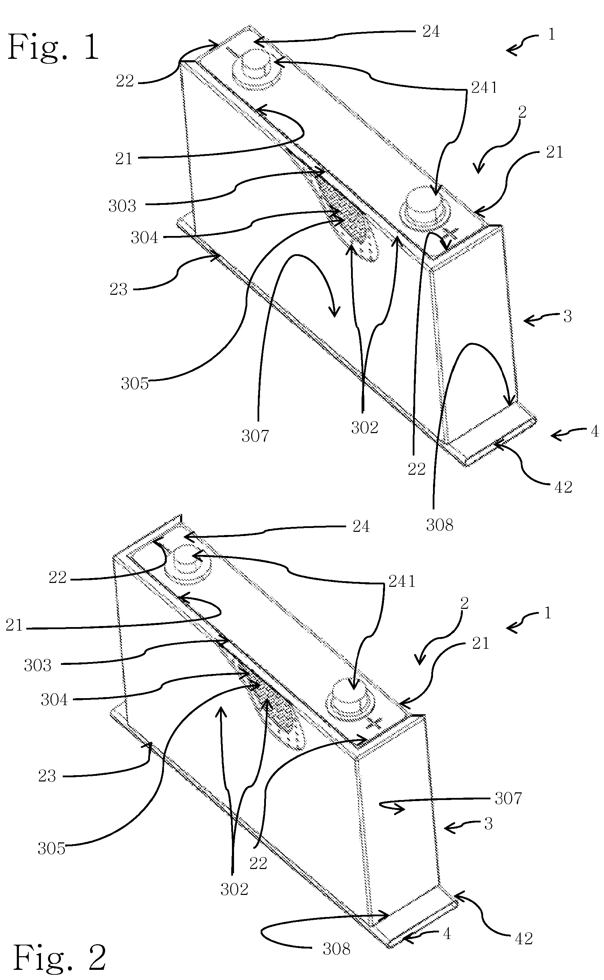

La figure 1 représente une vue générale, en perspective, du dispositif de stockage électrique 1 comprenant une cellule électrique 2 munie d'un caloduc 3 couplé thermiquement sur deux des faces de la cellule électrique 2.

La cellule électrique 2, de par sa forme parallélépipédique, comprend deux grandes faces 21, deux petites faces 22, une face inférieure 23 et une face supérieure 24 de laquelle émergent des plots de connexion électrique 241, ces derniers servant à connecter électriquement la cellule électrique 2 à un réseau.

Le dispositif de stockage électrique 1 comprend également le caloduc 3 se composant de deux parois 302 délimitant un volume hermétique. Chacune des parois 302 du caloducs 3 comprend une surface interne 303 et d'une surface externe 307, reliées par des bords 308. Les parois 302 du caloduc 3 comprennent sur leur surface interne 303 des espaceurs 304 assurant une distance adéquate entre les deux parois 302. Entre les deux parois 302, le caloduc 3 comprend le volume hermétique de fluide diphasique 305, ce dernier étant apte à subir un cycle thermodynamique d'évaporation et de condensation qui met en œuvre un transport de calories de la cellule électrique vers l'échangeur de chaleur.

Selon l'invention, le caloduc 3 est couplé thermiquement, par exemple, à une des deux grandes faces 21 de la cellule électrique 2 et à une des deux petites faces 22 de la cellule électrique 2 par l'intermédiaire de la surface externe 307 d'une des deux parois 302 du caloduc 3.

Le dispositif de stockage électrique 1 comprend, en outre, un échangeur de chaleur 4, comprenant une pluralité de tubes plats 42 et une partie d'alimentation en fluide des tubes plats 42. De plus, le caloduc 3 est couplé thermiquement aux tubes plats 42 de l'échangeur de chaleur 4 par l'intermédiaire des bords 308. Les tubes plats 42 délimitent un circuit parcouru par un fluide ou un liquide caloporteur. Ces tubes plats 42 présentent une section transversale oblongue et sont pourvus de plusieurs canaux. Le caractère plat des tubes 42 permet de faire reposer la cellule électrique 2 de manière à ce qu'elle soit en contact direct du tubes plat 42, en contact indirect via une paroi 302 du caloduc 3 interposée entre la cellule électrique 2 et le tube plat 42 de l'échangeur de chaleur 4.

La figure 2 est une vue générale et en perspective du dispositif de stockage électrique 1 selon un mode de réalisation, comprenant une cellule électrique 2 munie d'un caloduc 3 couplé thermiquement sur trois faces de la cellule électrique 2.

De manière similaire à la description énoncée dans la figure 1, le dispositif de stockage électrique 1 comprend un caloduc 3 dont seulement une grande face 21 de la cellule électrique 2 et les deux petites faces 22 de la cellule électrique 2 sont couplées thermiquement avec la surface externe 307 d'une des deux parois 302 du caloduc 3.

Le caloduc 3 et l'échangeur thermique 4 comprennent les mêmes composants et les mêmes caractéristiques qu'énoncé lors de la description de la figure 1 et on se reportera à celle-ci pour leur exécution.

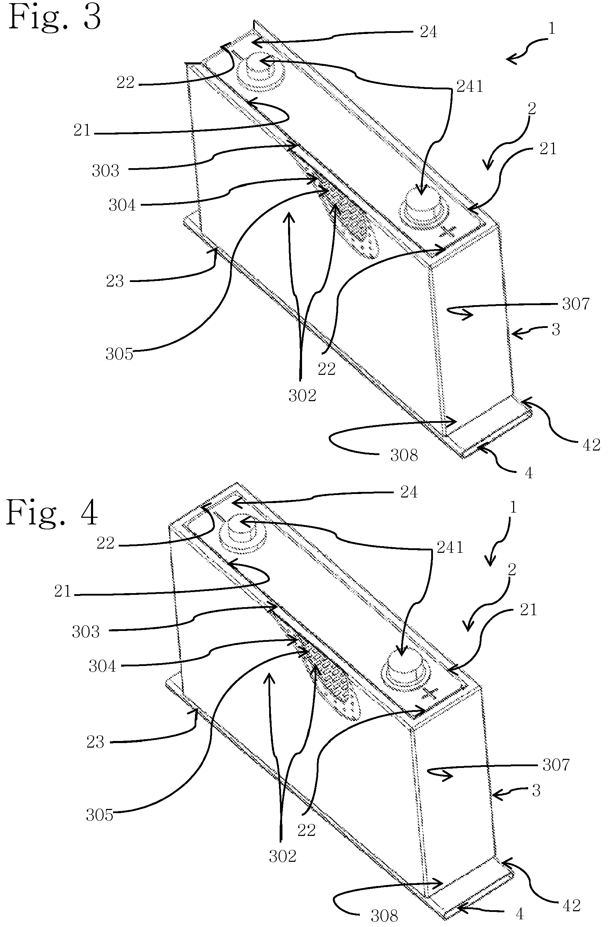

Une alternative du dispositif de stockage électrique 1 comprenant une cellule électrique 2 munie d'un caloduc 3 couplé thermiquement sur trois faces de la cellule électrique 2 est décrite en figure 3.

Le dispositif de stockage électrique 1 comprend ici un caloduc 3 dont les deux grandes faces 21 de la cellule électrique 2 et seulement une petite face 22 de la cellule électrique 2 sont couplées thermiquement avec la surface externe 307 d'une des deux parois 302 du caloduc 3.

Le caloduc 3 et l'échangeur thermique 4 comprennent les mêmes composants et les mêmes caractéristiques qu'énoncé lors de la description des figures 1 et 2 et on se reportera à celle-ci pour leur exécution.

La figure 4 présente, selon un autre mode de réalisation, un dispositif de stockage électrique 1 comprenant une cellule électrique 2 munie d'un caloduc 3 couplé thermiquement sur quatre faces de la cellule électrique 2.

Le dispositif de stockage électrique 1 comprend ainsi un caloduc 3 dont les deux grandes faces 21 de la cellule électrique 2 et les deux petites faces 22 de la cellule électrique 2 sont couplées thermiquement avec la surface externe 307 d'une des deux parois 302 du caloduc 3.

Le caloduc 3 et l'échangeur thermique 4 comprennent les mêmes composants et les mêmes caractéristiques qu'énoncé lors de la description des figures 1 à 3 et on se reportera à celle-ci pour leur exécution.

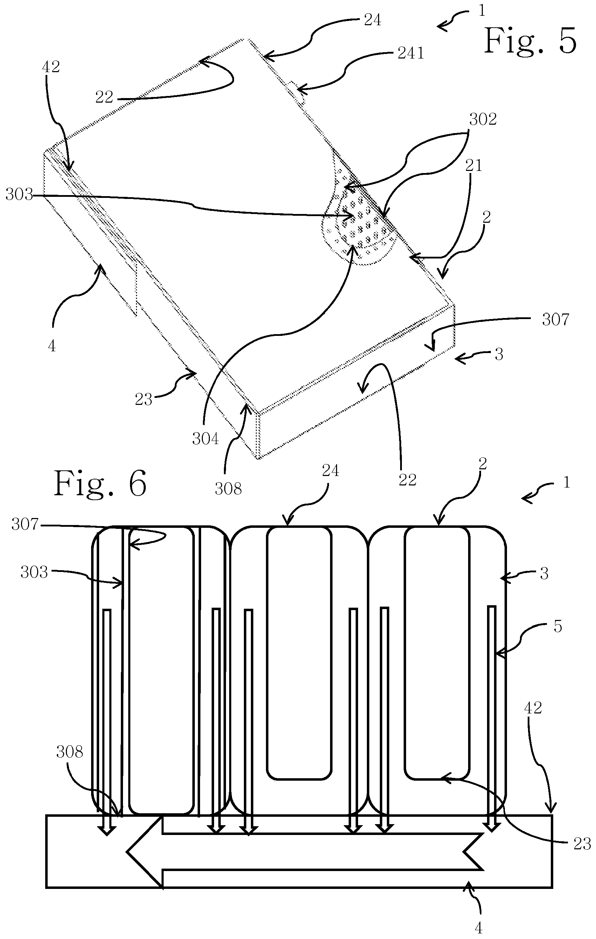

La figure 5 présente, selon un autre mode de réalisation, un dispositif de stockage électrique 1 comprenant une cellule électrique 2 munie d'un caloduc 3 couplé thermiquement sur cinq faces de la cellule électrique 2.

Le dispositif de stockage électrique 1 comprend un caloduc 3 dont les deux grandes faces 21 de la cellule électrique 2, les deux petites faces 22 de la cellule électrique 2 et la face inférieure 23 de la cellule électrique 2 sont couplées thermiquement avec la surface externe 307 d'une des deux parois 302 du caloduc 3.

Le caloduc 3 et l'échangeur thermique 4 comprennent les mêmes composants et les mêmes caractéristiques qu'énoncé lors de la description des figures 1 à 4 et on se reportera à celle-ci pour leur exécution.

La figure 6 représente une vue schématique d'un dispositif de stockage électrique 1 comprenant plusieurs cellules électriques 2, munies chacune d'un caloduc 3 individuel effectuant un transfert thermique 5 avec les tubes plats 42 de l'échangeur de chaleur 4. La figure 6 montre deux exemples de réalisation : à gauche, la cellule électrique 2 est en contact direct avec le tube plat 42, tandis qu'à droite, une paroi 302 du caloduc 3 est interposée entre la face inférieure 23 de la cellule électrique 2 et le tube plat 42.

Les cellules électriques 2, ainsi que leur caloduc 3 individuel, reposent sur les tubes plats 42, améliorant le transfert thermique et l'homogénéité de température de la cellule électrique 2, entre sa face inférieure 23 et sa face supérieure 24.

D'un point de vue dynamique, le transfert thermique 5 entre la cellule électrique 2 et l'échangeur de chaleur 4 s'effectue en plusieurs étapes : les calories produites par la cellule électrique 2 sont transmises au caloduc 3, par l'intermédiaire de ses grandes faces 21 et petites faces 22 qui sont couplées thermiquement avec la surface externe 307 d'une des deux parois 302. Ces calories sont ensuite transférées à un tube plat 42 de l'échangeur de chaleur 4 par l'intermédiaire des bords 308 du caloduc 3, ou par ces bords 308 et par la paroi 307 du caloduc 3 qui est interposée entre la face inférieure de la cellule électrique 2 et une portion plate du tube plat 42.

Selon le mode de réalisation décrit lors de la figure 5 et sur la partie gauche de la figure 6, le transfert de calories s'effectue aussi entre la face inférieure 23 de la cellule électrique 2 et la surface externe 307 d'une première paroi 302 du caloduc 3.

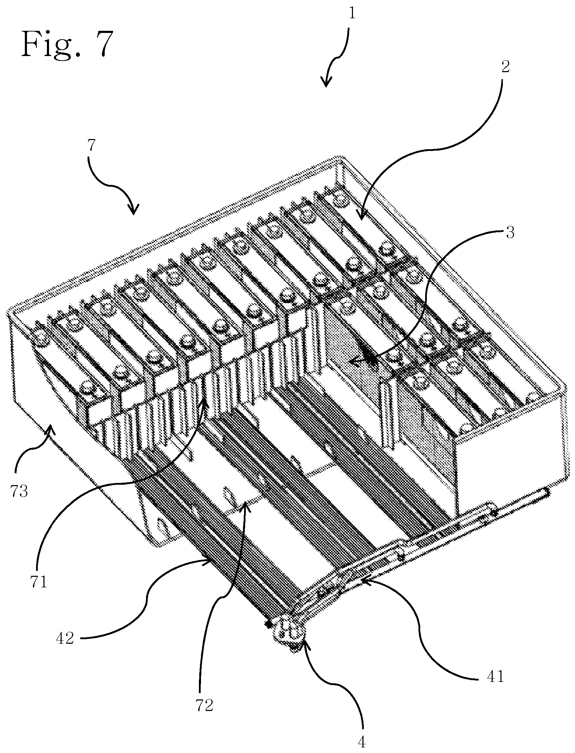

La figure 7 représente une vue globale du dispositif de stockage électrique 1 comprenant une pluralité de cellules électriques 2 munies chacune de leur caloduc 3 individuel en relation thermique avec un échangeur de chaleur 4 par l'intermédiaire de tubes plats 42.

Les cellules électriques 2, accompagnées de leur caloduc 3 multi-faces sont donc alignées suivant leurs grandes faces 21 et suivant leurs petites faces 22, formant ainsi un arrangement en linge et en colonne des cellules électriques 2. Par ailleurs, on observe que l'échangeur de chaleur 4 comprend la pluralité de tubes plats 42 et une partie d'alimentation 41 de ces tubes plats 42. Le fluide ou le liquide caloporteur entre dans l'échangeur de chaleur 4 par cette partie d'alimentation et est distribué vers chaque tube plat 42.

Un boîtier 7 maintient le dispositif de stockage électrique 1 en délimitant un espace de réception disponible pour chaque cellule électrique 2 accompagnée de son caloduc 3. Ce boitier 7 se compose d'un fond 72 contre lequel repose les tubes plats 42 et de côtés 73 délimitant l'espace de réception pour le dispositif de stockage électrique 1. Le boîtier 7 comprend au moins un dispositif de calage 71 des cellules électrique 2 qui partitionne l'espace de réception en rangée de plusieurs cellules électriques 2. Ce dispositif de calage 71 participe à la fixation des cellules électriques 2 et de leur caloduc dans le boîtier 7.

Dans le mode de réalisation ne tombant pas sous la définition de l'invention illustré à la figure 7, une lame d'air est ménagée entre deux caloducs 3 adjacents, et en particulier entre tous les caloducs 3. Cette lame d'air est présente entre deux grandes faces de deux cellules adjacentes et entre deux petites faces de deux autres cellules concomitantes.

Pour avoir une meilleure compréhension de la figure 7, des cellules électriques 2 ainsi que leur caloduc 3 individuel ont été supprimés de la figure, ainsi qu'une partie du fond 72 et des côtés 73 du boîtier 7.

## Revendications

1. Dispositif de stockage électrique (1) d'un véhicule configuré pour alimenter au moins un moteur électrique de traction du véhicule, le dispositif de stockage électrique (1) comprenant une pluralité de cellules électriques (2) de section parallélépipédique délimitée par au moins deux faces (21 - 23), le dispositif de stockage électrique (1) comprenant au moins un échangeur de chaleur (4) couplé thermiquement à la cellule électrique (2), chacune des cellules pourvue d'un caloduc individuel (3) étant couplé thermiquement avec la cellule électrique (2) et couplé thermiquement à l'échangeur de chaleur (4), **caractérisé, en ce que** le caloduc individuel (3) est couplé thermiquement avec au moins trois faces (21 - 23) d'une même cellule électrique (2), les caloducs enveloppant les cellules électriques sont disposés en contact les uns contre les autres.

2. Dispositif de stockage électrique (1) selon la revendication 1, **caractérisé en ce que** le caloduc (3) est couplé thermiquement avec au moins quatre faces (21 - 23) d'une même cellule électrique (2).

3. Dispositif de stockage électrique (1) selon la revendication 2, **caractérisé en ce que** le caloduc (3) est couplé thermiquement avec au moins cinq faces (21 - 23) d'une même cellule électrique (2).

4. Dispositif de stockage électrique (1) selon la revendication 1, **caractérisé en ce que** les parois (302) du caloduc (3) sont composées de matière rigide.

5. Dispositif de stockage électrique (1) selon la revendication 1, **caractérisé en ce que** les parois (302) du caloduc (3) sont composées de matière souple.

6. Dispositif de stockage électrique (1) selon la revendication 1, dans lequel une section du caloduc (3) est complémentaire de la section parallélépipédique de la cellule électrique (2).

7. Dispositif de stockage électrique (1) selon la revendication 4, **caractérisé en ce que** le caloduc (3) comprend une première paroi (302) séparée d'une deuxième paroi (302) par un volume hermétique rempli d'un fluide diphasique (305).

8. Dispositif de stockage électrique (1) selon la revendication 7, **caractérisé en ce que** le caloduc (3) comprend au moins un dispositif d'espacement (304) disposé entre la première paroi (302) et la deuxième paroi (302).

9. Dispositif de stockage électrique (1) selon l'une quelconque des revendications précédentes, dans laquelle l'échangeur de chaleur (4) comprend une pluralité de tubes plats (42) sur lesquels repose la pluralité de cellules électriques (2).

## Patentansprüche

1. Elektrische Speichervorrichtung (1) eines Fahrzeugs, konfiguriert zur Versorgung mindestens eines elektrischen Traktionsmotors des Fahrzeugs, wobei die elektrische Speichervorrichtung (1) eine Vielzahl von elektrischen Zellen (2) mit parallelepipedischer Sektion umfasst, die durch mindestens zwei Flächen (21-23) begrenzt ist, wobei die elektrische Speichervorrichtung (1) mindestens einen Wärmetauscher (4) umfasst, der thermisch mit der elektrischen Zelle (2) gekoppelt ist, wobei jede der Zellen mit einem individuellen Wärmerohr (3) versehen ist, das thermisch mit der elektrischen Zelle (2) gekoppelt und thermisch mit dem Wärmetauscher (4) gekoppelt ist, **dadurch gekennzeichnet, dass** das individuelle Wärmerohr (3) thermisch mit mindestens drei Flächen (21-23) derselben elektrischen Zelle (2) gekoppelt ist, wobei die die elektrischen Zellen umhüllenden Wärmerohre in Kontakt aneinander angeordnet sind.

2. Elektrische Speichervorrichtung (1) nach Anspruch 1, **dadurch gekennzeichnet, dass** das Wärmerohr (3) thermisch mit mindestens vier Flächen (21-23) derselben elektrischen Zelle (2) gekoppelt ist.

3. Elektrische Speichervorrichtung (1) nach Anspruch 2, **dadurch gekennzeichnet, dass** das Wärmerohr (3) thermisch mit mindestens fünf Flächen (21-23) derselben elektrischen Zelle (2) gekoppelt ist.

4. Elektrische Speichervorrichtung (1) nach Anspruch 1, **dadurch gekennzeichnet, dass** die Wände (302) des Wärmerohrs (3) aus starrem Material bestehen.

5. Elektrische Speichervorrichtung (1) nach Anspruch 1, **dadurch gekennzeichnet, dass** die Wände (302) des Wärmerohrs (3) aus flexiblem Material bestehen.

6. Elektrische Speichervorrichtung (1) nach Anspruch 1, bei der eine Sektion des Wärmerohrs (3) komplementär zur parallelepipedischen Sektion der elektrischen Zelle (2) ist.

7. Elektrische Speichervorrichtung (1) nach Anspruch 4, **dadurch gekennzeichnet, dass** das Wärmerohr (3) eine erste Wand (302) umfasst, die von einer zweiten Wand (302) durch ein hermetisches Volumen getrennt ist, das mit einem zweiphasigen Fluid (305) gefüllt ist.

8. Elektrische Speichervorrichtung (1) nach Anspruch 7, **dadurch gekennzeichnet, dass** das Wärmerohr (3) mindestens eine Abstandsvorrichtung (304) umfasst, die zwischen der ersten Wand (302) und der zweiten Wand (302) angeordnet ist.

9. Elektrische Speichervorrichtung (1) nach einem der vorhergehenden Ansprüche, bei der der Wärmetauscher (4) eine Vielzahl von flachen Rohren (42) umfasst, auf denen die Vielzahl von elektrischen Zellen (2) ruht.

## Claims

1. An electric storage device (1) for a vehicle configured to power at least one electric traction motor of the vehicle, the electric storage device (1) comprising a plurality of electric cells (2) of parallelepipedal section delimited by at least two faces (21-23), the electric storage device (1) comprising at least one heat exchanger (4) thermally coupled to the electric cell (2), each of the cells being provided with an individual heat pipe (3) being thermally coupled with the electric cell (2) and thermally coupled to the heat exchanger (4), **characterized in that** the individual heat pipe (3) is thermally coupled with at least three faces (21-23) of the same electric cell (2), the heat pipes enveloping the electric cells being arranged in contact with each other.

2. The electric storage device (1) according to claim 1, **characterized in that** the heat pipe (3) is thermally coupled with at least four faces (21-23) of the same electric cell (2).

3. The electric storage device (1) according to claim 2, **characterized in that** the heat pipe (3) is thermally coupled with at least five faces (21-23) of the same electric cell (2).

4. The electric storage device (1) according to claim 1, **characterized in that** the walls (302) of the heat pipe (3) are composed of rigid material.

5. The electric storage device (1) according to claim 1, **characterized in that** the walls (302) of the heat pipe (3) are composed of flexible material.

6. The electric storage device (1) according to claim 1, wherein a section of the heat pipe (3) is complementary to the parallelepipedal section of the electric cell (2).

7. The electric storage device (1) according to claim 4, **characterized in that** the heat pipe (3) comprises a first wall (302) separated from a second wall (302) by a hermetic volume filled with a two-phase fluid (305).

8. The electric storage device (1) according to claim 7, **characterized in that** the heat pipe (3) comprises at least one spacing device (304) arranged between the first wall (302) and the second wall (302).

9. The electric storage device (1) according to any one of the preceding claims, wherein the heat exchanger (4) comprises a plurality of flat tubes (42) on which the plurality of electric cells (2) rests.
